# EUROPEAN PATENT APPLICATION

(11) **EP 1 955 885 A2**
(43) Date of publication of application: **13.08.2008**
(21) Application number: 08001458.2
(22) Date of filing: 25.01.2008
(51) Int. Cl.: B60K 6/44, B60K 6/38, B60K 6/387

(54) **Vehicle driving system**

(30) Priority: 09.02.2007 JP 2007030527
(71) Applicant: Hitachi, Ltd., Chiyoda-ku Tokyo 100-8280 (JP)
(72) Inventor: Itoh, Kohei, Hitachinaka-shi, Ibaraki 312-0062 (JP); Fujiwara, Shin, Hitachinaka-shi, Ibaraki 312-0062 (JP); Matsuzaki, Norikazu, Tokyo 100-8220 (JP); Takamune, Yuuichirou, Toyko 100-8220 (JP); Ito, Masaru, Toyko 100-8220 (JP)
(74) Representative: Matias, Bruno M.

(57) **Abstract**

The present invention relates to a vehicle driving system capable of engaging a clutch smoothly and early when clutch engaging is requested.

A 4WD CU (100) controls a motor (5) and engagement/disengagement of a clutch (4). After the clutch (4) is disengaged, the 4WD CU (100) matches a rotating speed of a section which drives the clutch, and a rotating speed of a section which is driven by the clutch. A speed-synchronizing request detector (140) discriminates whether the driving side requires synchronization in speed. If the speed-synchronizing request detector (140) discriminates that the driving side requires the synchronization in speed, the 4WD CU (100) matches the speed of the driving side with that of the driven side.

## Description

### BACKGROUND OF THE INVENTION

### 1. Field of the Invention

The present invention relates to a system for driving a vehicle, and typically to a technique intended to improve traveling performance.

### 2. Description of the Related Art

A known technique relating to a vehicle driving system is disclosed in, for example, JP-A-2001-260716. JP-A-2001-260716 discloses a technique that makes smooth clutch engagement possible by synchronizing the rotation of a motor output shaft with the rotation of a driven element when the clutch is disengaged and engaged.

### SUMMARY OF THE INVENTION

A clutch cannot be engaged smoothly when there is a divergence in rotating speed between a motor and a driven element. Therefore, when the motor is in a stopped or standby state and the rotating speed of the driven element is higher than that of the motor, the rotations of both are, as in the technique disclosed in JP-A-2001-260716, synchronized before the clutch is engaged. This enables smooth engagement of the clutch. Engaging the clutch after the motor and the driven element have been synchronized in rotating speed, however, causes a delay in power transmission from the motor to wheels due to a time lag from a request for the clutch engagement to the actual establishment of the clutch engagement. This delay is considered to cause unstable vehicle behavior before the clutch is engaged. Resolving these problems is desirable for improved traveling performance such as roadability and gradient climbing capability.

One of the typical aspects of the present invention is intended to provide a vehicle driving system that can improve traveling performance of a vehicle.

The vehicle driving system according to one typical aspect of the present invention is characterized in that the system transmits rotational power of an electric motor to the motor connection side of a power transmission mechanism so that if the transmission of the rotational power of the motor to wheels is interrupted by the power transmission mechanism, the motor connection side of the power transmission mechanism will synchronize with the wheel connection side thereof in rotating speed.

According to the above typical aspect of the present invention, unstable behavior of a vehicle can be suppressed since rotational power of an electric motor can be immediately transmitted to wheels, even after the vehicle has been changed over from a state under which transmission of the rotational power of the motor to the wheels is interrupted by a power transmission mechanism, to a state in which the rotational power of the motor is transmitted to the wheels.

Features of an embodiment of the present invention are listed below.
(1) In order to attain the foregoing object, one aspect of the present invention is constructed to include an electric motor that generates rotational power transmitted to wheels via a power transmission mechanism, and/or to transmit the rotational power from the motor to the motor connection side of a power transmission mechanism so that if the transmission of the rotational power of the motor to the wheels is interrupted by the power transmission mechanism, the motor connection side of the power transmission mechanism will synchronize with the wheel connection side thereof in rotating speed.
   The above construction makes smooth and early clutch engagement possible when the clutch engagement is requested.
(2) In order to attain the foregoing object, another aspect of the present invention is constructed to include an electric motor mechanically connected to, via a power transmission mechanism, second wheels different from first wheels driven by motive power of an internal combustion engine, the motor being driven by a vehicle-mounted electric power supply to generate rotational power transmitted to the second wheels via the power transmission mechanism. This construction also includes control means to control the driving of the motor. If the transmission of the rotational power to the second wheels is interrupted by the power transmission mechanism, the control means controls the driving of the motor with a rotating speed of the second-wheels side of the power transmission mechanism as a synchronous target speed, and controls the motor side of the power transmission mechanism so that the motor side synchronizes with the second-wheels side at the synchronous target speed.
   The above construction makes smooth and early clutch engagement possible when the clutch engagement is requested.
(3) In order to attain the foregoing object, yet another aspect of the present invention is a vehicle driving system mounted in a vehicle which uses an output of power from an internal combustion engine to drive either ones of front or rear wheels and uses an output of rotational power from an electric motor to drive the other front or rear wheels. In addition to the motor for generating the rotational power by using an electric power supply mounted as a driving power supply in the vehicle, the system is constructed to include a power transmission mechanism disposed between the motor and the other wheels in order to control transmission of the rotational power to the other wheels, and/or control means for controlling the driving of the motor and an operation of the power transmission mechanism; wherein, after interrupting the transmission of the rotational power to the other wheels by controlling the operation of the power transmission mechanism, the control means controls the driving of the motor so that the other wheels side of the power transmission mechanism synchronizes with the motor side thereof in rotating speed.
   The above construction makes smooth and early clutch engagement possible when the clutch engagement is requested.
(4) In above item (3), the system preferably is further provided with means for judging whether speed-synchronizing control is required that synchronizes the other wheels side of the power transmission mechanism and the motor side thereof in rotating speed; wherein the control means executes the speed-synchronizing control when the judging means judges the speed-synchronizing control to be necessary.
(5) In above item (4), if slipping of the front wheels is detected, the judging means preferably judges the speed-synchronizing control to be necessary.
(6) In item (4), the judging means preferably judges the speed-synchronizing control to be necessary, if a forced four-wheel drive mode in which the front or rear wheels are forcibly driven by the internal combustion engine or the motor, respectively, is selected by means that selects the forced four-wheel drive mode.
(7) In item (3), in case of insufficiency in the rotational power of the motor that is needed to synchronize the motor side of the power transmission mechanism with the wheels side thereof in rotating speed, the control means preferably controls the driving of the motor so that the rotational power of the motor is transmitted therefrom to the motor side of the power transmission mechanism in a range which permits the rotational power of the motor to be output.
(8) In above item (7), in case of insufficiency in the rotational power of the motor that is needed to synchronize the motor side of the power transmission mechanism with the wheels side thereof in rotating speed, the control means preferably reduces a field current to be supplied to the motor.
(9) In item (4), if a brake pedal is stepped on, if a speed of the rear wheels increases, if a state in which the amount of accelerator pedaling is controlled below a required value continues for at least a required time, or if a mode different from the forced four-wheel drive mode in which the front or rear wheels is forcibly driven by the internal combustion engine or the motor, respectively, is selected by the means that selects the forced four-wheel drive mode, the judging means judges that the speed-synchronizing control is unnecessary, and/or when this judgment is conducted, the control means stops the speed-synchronizing control.
(10) The driving power supply in item (3) is preferably an electric power generator driven by the internal combustion engine.
(11) In order to attain the foregoing object, yet another aspect of the present invention is constructed to include an electric motor mechanically connected to, via a power transmission mechanism, second wheels different from first wheels driven by power of an internal combustion engine, the motor being driven by a vehicle-mounted electric power supply to generate rotational power transmitted to the second wheels via the power transmission mechanism. This construction also includes control means to control the driving of the motor. The control means has a driving control mode in which to control the driving of the motor, transmit the rotational power from the motor through the power transmission mechanism to the second wheels, and control the second wheels, and a rotational synchronization hold mode in which to transmit the rotational power from the motor to the motor side of the power transmission mechanism so that when the transmission of the rotational power to the second wheels is already interrupted by the power transmission mechanism, the motor side thereof synchronizes with the wheels side thereof in rotating speed. The control means executes the rotational synchronization hold mode, after execution of the driving control mode, if the transmission of the rotational power to the second wheels is interrupted by the power transmission mechanism.

The above construction makes smooth and early clutch engagement possible when the clutch engagement is requested.

According to one typical aspect of the present invention, traveling performance of a vehicle can be improved since it is possible to immediately transmit rotational power of an electric motor to wheels and suppress unstable vehicle behavior.

### BRIEF DESCRIPTION OF THE DRAWINGS

Fig. 1 is a system block diagram showing a total configuration of a four-wheel drive vehicle which uses a vehicle driving system according to an embodiment of the present invention;
Fig. 2 is a system block diagram showing a configuration of the vehicle driving system according to the present embodiment;
Fig. 3 is a timing chart that shows operation of a driving mode judging element in the vehicle driving system according to the present embodiment;
Fig. 4 is a block diagram showing a configuration of a motor torque target data calculator in the vehicle driving system of the present embodiment;
Fig. 5 is a characteristics diagram that shows operation of an accelerator response torque computing block in the motor torque target data calculator of the vehicle driving system according to the present embodiment;
Fig. 6 is a characteristics diagram that shows operation of a front/rear wheel differential velocity response torque computing block in the motor torque target data calculator of the vehicle driving system according to the present embodiment;
Fig. 7 is a block diagram showing a configuration of a driver unit in the vehicle driving system of the present embodiment;
Fig. 8 is a flowchart that shows operation of a speed-synchronizing request detector in the vehicle driving system of the present embodiment; and
Fig. 9 is a timing chart that shows operation of the speed-synchronizing request detector in the vehicle driving system of the present embodiment.

### DETAILED DESCRIPTION OF THE PREFERRED EMBODIMENTS

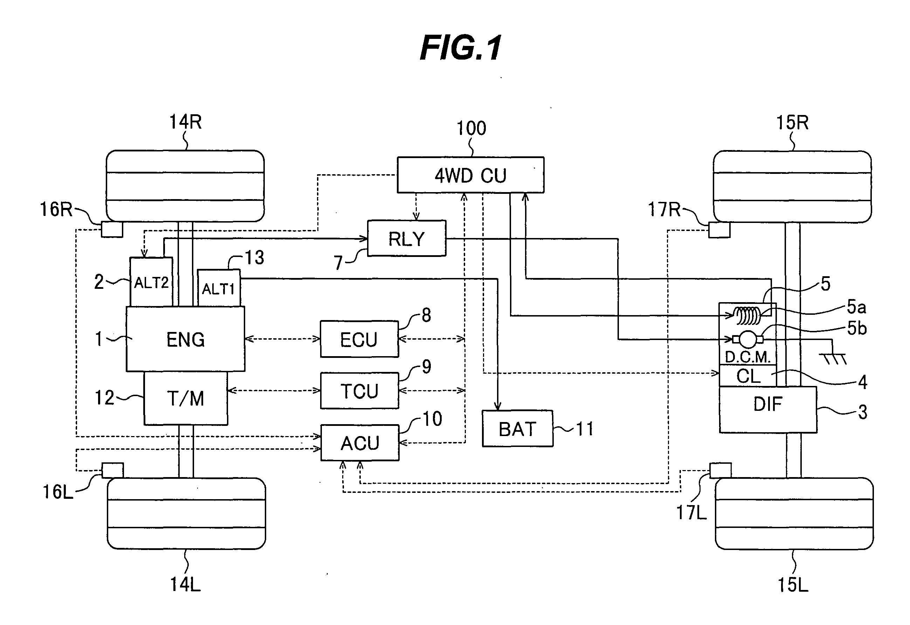

A structural and operational description of a vehicle driving system according to an embodiment of the present invention is given below with reference to Figs. 1 to 9.

First, a total configuration of a four-wheel drive vehicle using a vehicle driving system of the present embodiment is described referring to Fig. 1.

Fig. 1 is a system block diagram showing the total configuration of the four-wheel drive vehicle which uses the vehicle driving system of the present embodiment.

The four-wheel drive vehicle has an engine (ENG) 1 and an electric motor 5. Driving force of the engine (ENG) 1 is transmitted to left and right front wheels 14R and 14L via a transmission (T/M) 12 and a first shaft, thus driving the front wheels 14R, 14L.

Driving force of the motor 5 is transmitted to left and right rear wheels 15R and 15L via a clutch (CL) 4, a differential (DIFF) gear 3, and a second shaft, thus driving the rear wheels 15R, 15L. When the clutch (CL) 4 becomes engaged with the differential (DIFF) gear 3, rotational force of the motor 5 is transmitted to the rear wheels 15R, 15L via the differential (DIFF) gear 3, so that the rear wheels 15R, 15L are driven. When the clutch (CL) 4 becomes disengaged, the motor 5 is mechanically separated from the rear wheels 15R, 15L to prevent the rear wheels 15R, 15L from transmitting the driving force to a road surface. The engagement and disengagement of the clutch (CL) 4 are controlled by a four-wheel driving control unit (4WD CU) 100. A changeover between a four-wheel driving (4WD) mode and a two-wheel driving (2WD) mode is conducted by the 4WD CU 100 automatically. For example, if slipping of the front or rear wheels is detected, the 4WD CU 100 selects four-wheel driving (4WD) automatically and the clutch (CL) 4 is engaged. Also, the 4WD CU 100 controls a driving torque of the motor 5 to drive the rear wheels 15R, 15L with the controlled driving torque. If a switch for conducting a manual changeover between a four-wheel driving (4WD) mode and a two-wheel driving (2WD) mode is provided and a two-wheel driving (2WD) position of the switch is selected, the two-wheel driving (2WD) mode is maintained, and if a four-wheel driving (4WD) position of the switch is selected, automatic selection of two-wheel driving (2WD) or four-wheel driving (4WD) is possible. The motor 5 is, for example, either a direct-current (DC) shunt motor whose forward or reverse rotation is easy to select, or a separately excited motor.

It should be noted that while it is described above that the vehicle is of the four-wheel drive type whose front wheels 14R, 14L are driven by the engine (ENG) 1 and whose front wheels 15R, 15L are driven by the motor 5, the front wheels may be driven by the motor, and the rear wheels by the engine.

The engine room contains an auxiliary alternator (ALT1) 13 and an auxiliary battery (BAT) 11 used to construct a normal charger/generator system. The auxiliary alternator (ALT1) 13 is belt-driven by the engine (ENG) 1, and an output from the alternator is stored into the auxiliary battery (BAT) 11.

Also, a driving high-power alternator (ALT2) 2 is disposed near the auxiliary alternator (ALT1) 13. The driving high-power alternator (ALT2) 2 is also belt-driven by the engine (ENG) 1, and an output from the alternator 2 drives the motor 5. Electric power generated by the driving high-power alternator (ALT2) 2 is controlled by the 4WD CU 100. A change in the electric power generated by the driving high-power alternator (ALT2) 2 changes a motor torque that is an output of the motor 5. That is to say, the 4WD CU 100 outputs a command value (duty signal that causes the alternator to have a required field current value) to the driving high-power alternator (ALT2) 2, thus changing the electric power generated thereby. The electric power generated by the driving high-power alternator (ALT2) 2 is applied to an armature coil 5b of the motor 5 and changes the output (motor torque) thereof. The 4WD CU 100 controls the output (motor torque) of the motor 5 by controlling the output (generated power) of the driving high-power alternator (ALT2) 2. Additionally, in a higher-speed region of the motor 5, the 4WD CU 100 directly controls the motor 5 to allow faster rotation thereof, by subjecting the field current supplied to a field coil 5a of the motor 5 to field-weakening control.

While a DC motor is used as the motor 5 in the above description, an alternating-current (AC) motor can be used instead of the DC motor. This AC motor may be a three-phase synchronous motor. To use a three-phase synchronous motor, an inverter for DC-to-AC power conversion between the driving high-power alternator (ALT2) 2 and the three-phase AC motor is required.

In addition, while the electrically powered four-wheel drive vehicle configuration with the motor 5 directly driven by the output from the driving high-power alternator (ALT2) 2 is shown and described herein, the present invention is also applicable to a hybrid automobile adapted to temporarily store the output of the driving high-power alternator (ALT2) 2 into a high-voltage battery and then use the stored power within this high-voltage battery to drive the motor 5.

The output of the engine (ENG) 1 is controlled by an engine control unit (ECU) 8. The engine (ENG) 1 has, although not shown, an engine speed sensor for detecting a speed of the engine, and an accelerator opening angle sensor for detecting an operating angle of an accelerator pedal. Outputs from the sensors are acquired by the 4WD CU 100. A transmission controller (TCU) 9 controls the transmission (T/M) 12.

The front wheels 14R, 14L and the rear wheels 15R, 15L each have a wheel velocity sensor 16R, 16L, 17R, or 17L, respectively. Also, a brake has an anti-lock brake actuator controlled by an anti-lock brake control unit (ACU) 10.

Signals may be input from an interface of the engine control unit (ECU) 8, transmission control unit (TCU) 9, or anti-lock brake control unit (ACU) 10, or from an interface of any other control unit, via a bus of an interior LAN of the vehicle (i.e., a bus of a CAN), to the 4WD CU 100.

A large-capacity relay (RLY) 7 is provided between the driving high-power alternator (ALT2) 2 and the motor 5 so that the output of the driving high-power alternator (ALT2) 2 can be interrupted. Open/close operation of the relay (RLY) 7 is controlled by the 4WD CU 100.

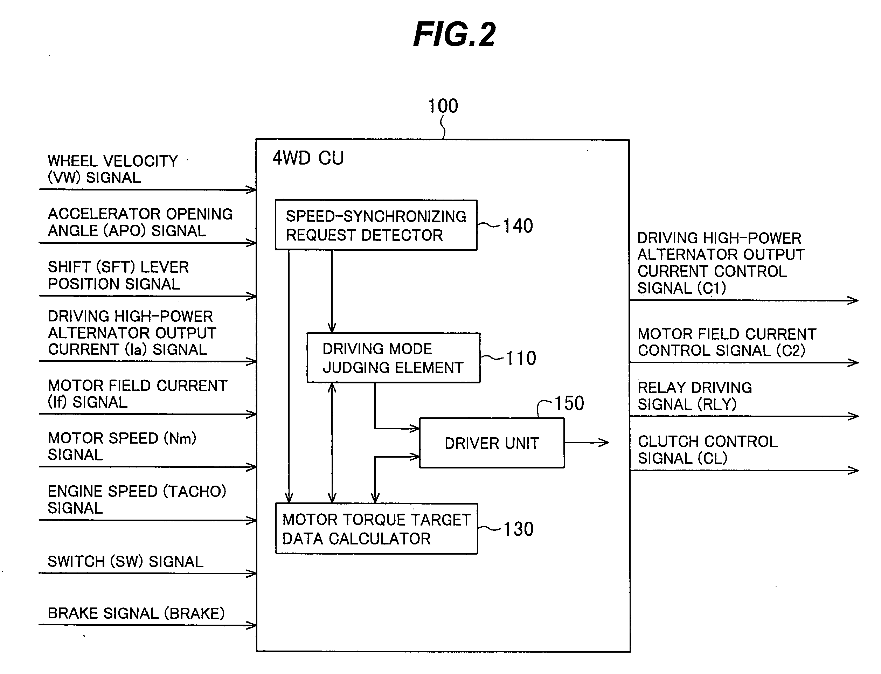

Next, a configuration of the vehicle driving system according to the present embodiment is described below referring to Fig. 2.

Fig. 2 is a system block diagram showing the configuration of the vehicle driving system according to the present embodiment.

The 4WD CU 100 includes a driving mode judging element 110, a motor torque target data calculator 130, a speed-synchronizing request detector 140, and a driver unit 150. Signals to be sent as input signals to the 4WD CU 100A include wheel velocity (VW) signal, an accelerator opening angle (APO) signal, a shift position (SFT) signal, a driving high-power alternator output current (Ia) signal, a motor field current (If) signal, a motor speed (Nm) signal, an engine speed (TACHO) signal, and a brake (BRAKE) signal.

The wheel velocity (VW) signal includes the front right-wheel velocity VWF_RH, front left-wheel velocity VWF_LH, rear right-wheel velocity VWR_RH, and rear left-wheel velocity VWR_LH detected by the wheel velocity sensors 16R, 16L, 17R, and 17L, respectively. The 4WD CU 100 internally calculates a rear-wheel average velocity VWR that is an average value of the detected rear right-wheel velocity VWR_RH and rear left-wheel velocity VWR_LH, and a front-wheel average velocity VWF that is an average value of the detected front right-wheel velocity VWF_RH and front left-wheel velocity VWF_LH.

The accelerator opening angle (APO) signal is the output signal from the foregoing accelerator opening angle sensor, supplied as an input signal to the 4WD CU 100. The 4WD CU 100 generates an accelerator-on signal when such an angle that the 4WD CU 100 can recognize that a driving person has stepped on the accelerator pedal is reached, or example, when an accelerator-opening level of 3% is reached. At an accelerator opening level below 3%, the 4WD CU 100 generates an accelerator-off signal. It is also possible, for example, to provide hysteresis characteristics between a threshold level for accelerator-on judgment and a threshold level for accelerator-off judgment.

The shift position (SFT) signal is an input signal that the 4WD CU 100 receives as an output from a shift lever position sensor provided near a shift lever. For an automatic transmission (AT) vehicle, the shift position (SFT) signal indicates whether the shift lever is placed in a D-range position or in other range positions.

The driving high-power alternator output current (Ia) signal is an output current of the driving high-power alternator (ALT2) 2, flowing into the armature coil 5b of the motor. The motor field current (If) signal is a field current flowing into the field coil 5a of the motor 5. The motor speed (Nm) signal is a signal indicating the rotating speed of the motor 5.

The engine speed (TACHO) signal is an input signal of the foregoing engine speed sensor, supplied as an input signal to the 4WD CU 100.

The brake (BRAKE) signal is a signal indicating that the brake pedal has been stepped on.

The 4WD CU 100 outputs a driving high-power alternator output current control signal C1, a motor field current control signal C2, a RLY driving signal RLY, and a clutch control signal CL. The driving high-power alternator output current control signal C1 controls a field current flowing into a field coil of the driving high-power alternator (ALT2) 2. The motor field current control signal C2 controls the field current flowing into the field coil of the motor 5. The RLY driving signal RLY controls the opening and closing of the relay 7. The clutch control signal CL controls the engagement and disengagement of the clutch (CL) 4.

The driving mode judging element 110 discriminates a four-wheel driving mode (MODE) on the basis of the wheel velocity signal VW, the accelerator opening angle signal APO, and the shift position signal SFT. The driving modes (MODE) to be discriminated include a 2WD driving mode 2, 4WD driving standby mode 3, creep-driving mode 4, 4WD driving control mode 5, synchronous-speed hold driving mode 6, driving-mode stopping sequence mode 7, and speed-matched driving mode 8. The present embodiment features the synchronous-speed hold driving mode 6.

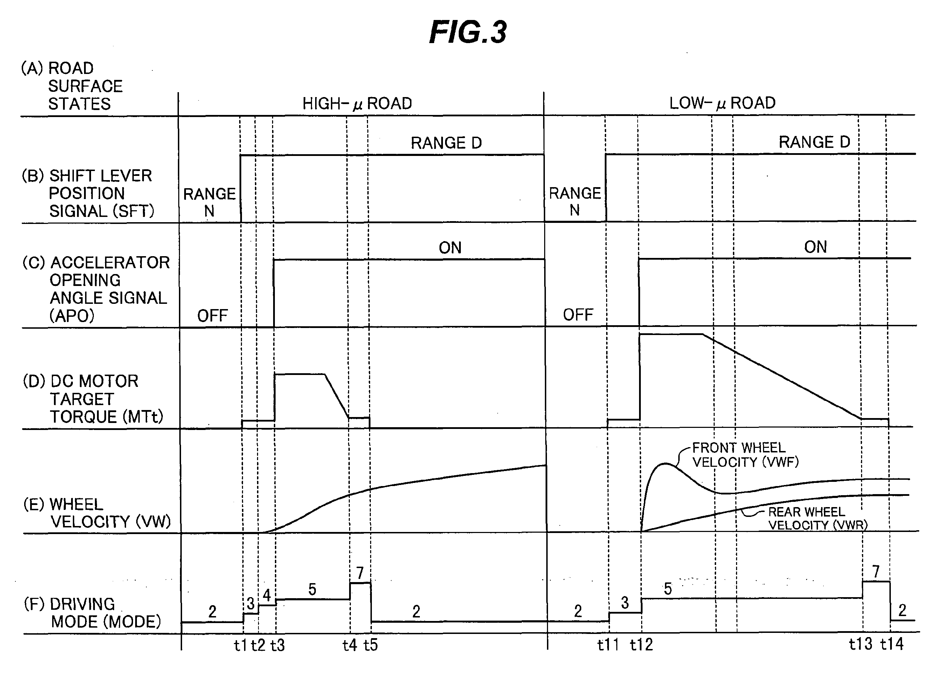

Operation of the driving mode judging element 110 in the vehicle driving system according to the present embodiment is described below with reference to Fig. 3.

Fig. 3 is a timing chart showing the operation of the driving mode judging element 110 in the vehicle driving system according to the present embodiment.

Section (A) in Fig. 3 indicates road surface states, wherein, for example, a high-µroad has a large road-surface frictional coefficient and a low-µroad has a small road-surface frictional coefficient. Section (B) in Fig. 3 indicates the shift lever position. Whether the shift lever is in the D-range position or in other positions is distinguished by the output from the shift lever position sensor. Section (C) in Fig. 3 indicates the accelerator opening angle (APO). As described above, an accelerator-on signal or an accelerator-off signal is generated, in response to the accelerator opening angle (APO). For example, when the accelerator opening level reaches 3%, the accelerator-on signal is generated, and when the accelerator opening level decreases less than 3%, the accelerator-off signal is generated. Section (D) in Fig. 3 indicates a motor torque target value (MTt). Section (E) in Fig. 3 indicates the wheel velocity (VW). Although the wheel velocity (VW) signal includes the front right-wheel velocity VWF_RH, the front left-wheel velocity VWF_LH, the rear right-wheel velocity VWR_RH, and the rear left-wheel velocity VWR_LH, only the rear-wheel average velocity VWR that is an average value of the detected rear right-wheel velocity VWR_RH and rear left-wheel velocity VWR_LH, and the front-wheel average velocity VWF that is an average value of the detected front right-wheel velocity VWF_RH and front left-wheel velocity VWF_LH are shown in the figure. Section (F) indicates the driving mode (MODE) discriminated by the driving mode judging element 110.

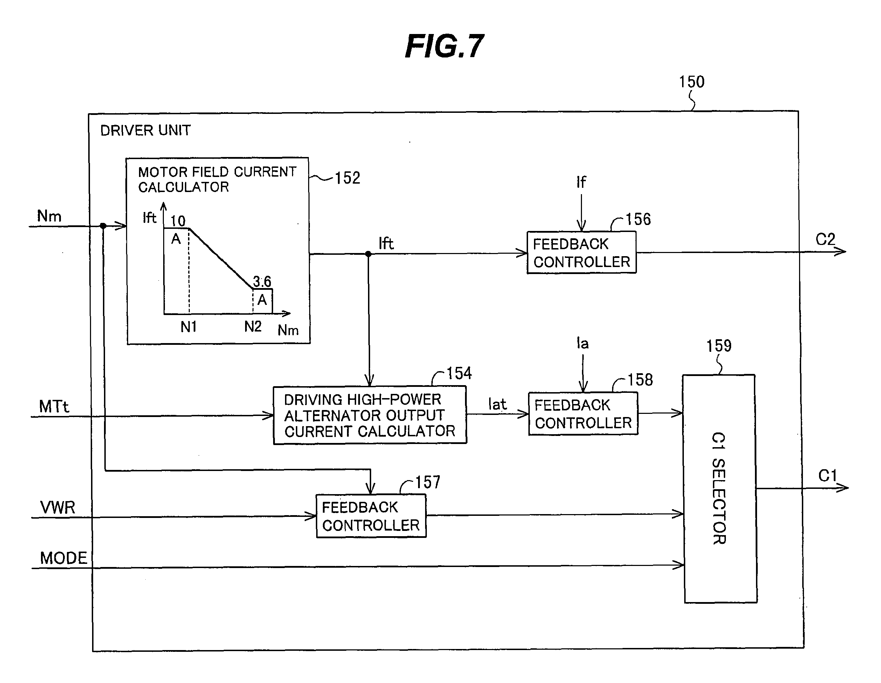

Before the time t1 shown in Fig. 3 is reached, the vehicle is in 2WD driving mode 2. At time t1, when the shift lever position signal (SFT) indicates range D as denoted by (B) in Fig. 3, the accelerator opening angle sensor (APO) is off as denoted by (C), and the wheel velocity (VW) is 0 km/h as denoted by (E) in Fig. 3, the driving mode judging element 110 judges that the vehicle is in 4WD driving standby mode 3. After this, the driving mode judging element 110 outputs a motor torque target value (MTt) of, for example, 0.5 Nm to the driver unit 150 shown in Fig. 2. The output torque of the motor 5 is set to, for example, 0.5 Nm, a slight driving torque is transmitted from the motor 5 to the rear wheels beforehand, and the vehicle stands by so as to be able to respond immediately when four-wheel driving is selected next time. The driver unit 150 outputs the driving high-power alternator output current control signal C1 so that the motor torque target value (MTt) is, for example, 0.5 Nm. Details of the driver unit 150 will be described later herein with reference to Fig. 7.

Next at time t2, when the accelerator opening angle sensor (APO) is off as denoted by (C) in Fig. 3, the shift lever position signal (SFT) indicates range D as denoted by (B), the wheel velocity (VW) slightly increases from 0 km/h as denoted by (E) in Fig. 3, and the vehicle enters a creeping state, the driving mode judging element 110 judges that the vehicle has been set to creep-driving mode 4. After this, the driving mode judging element 110 outputs a motor torque target (MTt) value greater than that in 4WD driving standby mode 3, for example, 1.0 Nm, to the driver unit 150 shown in Fig. 2. That is to say, driving force is transmitted to the front wheels (14R, 14L) by the engine (ENG) 1, and after the vehicle has entered the creeping state, driving force is also transmitted from the motor 5 to the rear wheels (15R, 15L). Thus, the vehicle enters a creeping state based on front and rear wheel driving.

Next at time t3, when the shift lever is put into range D as denoted by (B) in Fig. 3 and the accelerator opening angle sensor (APO) turns on as denoted by (C) in Fig. 3, the driving mode judging element 110 judges that the vehicle is in 4WD driving control mode 5. After this, the driving mode judging element 110 notifies this mode to the motor torque target data calculator 130. As denoted by (D) in Fig. 3, the motor torque target data calculator 130 calculates a motor torque target value of 4.5 Nm, for example. This motor torque target value of 4.5 Nm is maintained until the wheel velocity (VW) shown as (E) in Fig. 1 has reached 8 km/h, for example. After the wheel velocity (VW) has reached 8 km/h, the motor torque target value (MTt) is linearly reduced to obtain a motor torque target value (MTt) of 0.5 Nm after a required time. At time t4, when the motor torque target value shown as (D) in Fig. 3 becomes 0.5 Nm, the driving mode judging element 110 judges that the vehicle is in driving-mode stopping sequence mode 7, and then maintains the motor torque target value of 0.5 Nm. Next at time t5, the relay (RLY) 7 is turned off and the clutch (CL) 4 is also turned off. The motor torque target value (MTt) is then cleared to 0.0 Nm and 2WD driving mode 2 is set.

As described above, when the vehicle is started, the vehicle driving system not only activates the engine (ENG) 1 to drive the front wheels (14R, 141), but also uses the motor 5 to drive the rear wheels (15R, 15L). Thus, during the vehicle start, the system drives the four wheels and improves starting performance of the vehicle on the low-µroad. The above sequence applies to the vehicle-driving control in the high-µroad surface state, shown as (A) in Fig. 3.

On the low-µroad shown as (A) in Fig. 3, if the front wheels slip, the driving mode judging element 110 judges that there is a need to set 4WD driving control mode 5 for controlling the slipping state. This will be described later herein.

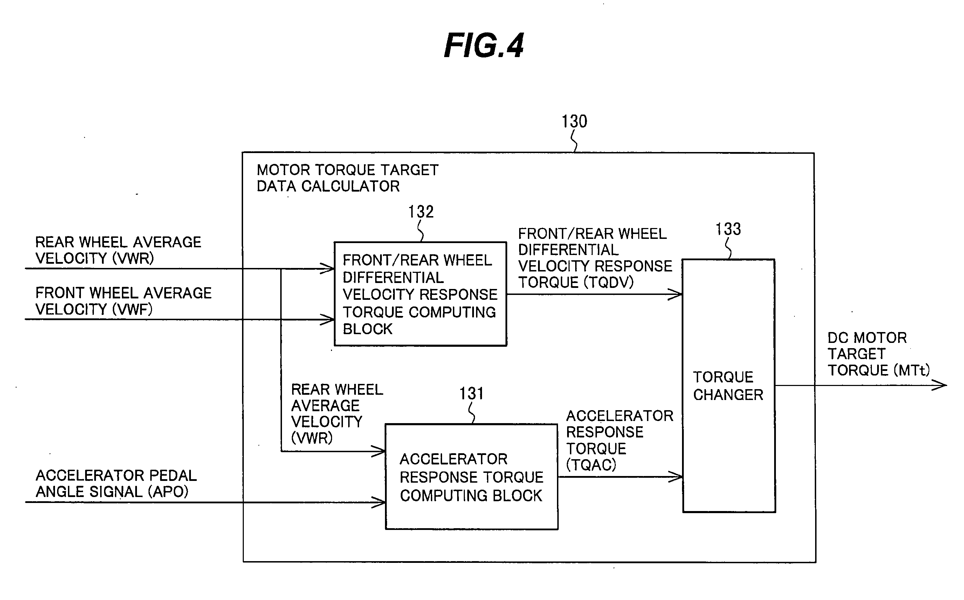

A configuration of the motor torque target data calculator 130 in the vehicle driving system of the present embodiment is described below referring to Fig. 4.

Fig. 4 is a block diagram showing the configuration of the motor torque target data calculator 130 in the vehicle driving system of the present embodiment.

The DC motor torque target data calculator 130 includes an accelerator response torque computing block 131, a front/rear wheel differential velocity response torque computing block 132, and a torque changer 133.

The accelerator response torque computing block 131 calculates a motor torque target value to be set when the driving mode judging element 110 judges that the driving mode is 4WD driving control mode 5. The front/rear wheel differential velocity response torque computing block 132 calculates a motor torque target value to be set when a difference arises between the front wheel velocity and the rear wheel velocity, specifically, when the front wheel velocity becomes higher than the rear wheel velocity and a slipping state of the front wheels is detected. The torque changer 133 compares the motor torque target value output from the accelerator response torque computing block 131, and the motor torque target value output from the front/rear wheel differential velocity response torque computing block 132, and outputs the greater of the two values. If it is judged that the vehicle is in 4WD driving control mode 5, when a difference between the front wheel velocity and the rear wheel velocity is not occurring during vehicle traveling on the high-µroad, the motor torque target value output from the front/rear wheel differential velocity response torque computing block 132 will be 0 Nm. Therefore, the output from the torque changer 133 will be the same as the output of the accelerator response torque computing block 131.

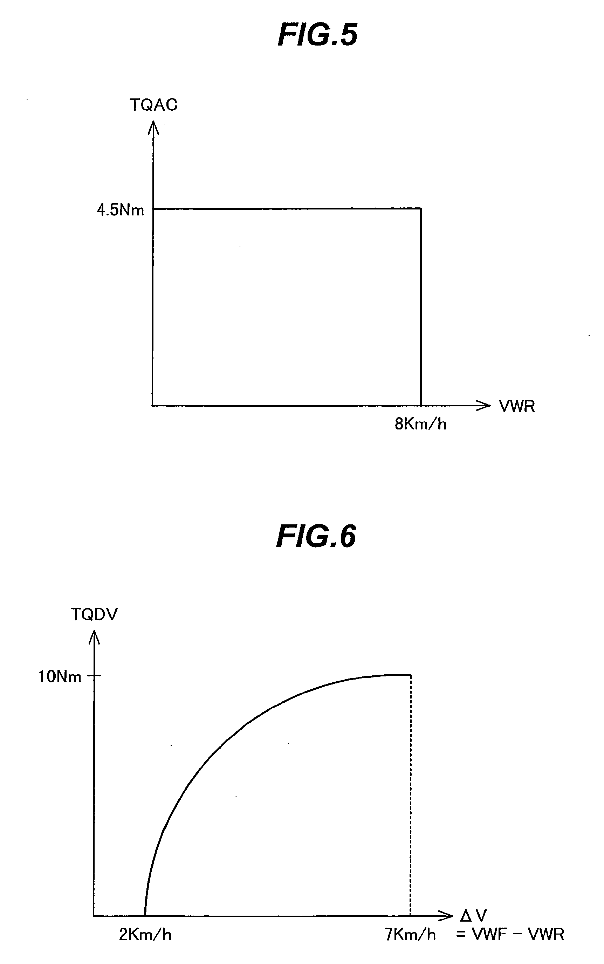

The motor torque target value that the accelerator response torque computing block 131 calculates when the driving mode detector 110 judges that the vehicle is in 4WD driving control mode 5 is described below with reference to Figs. 4 and 5.

Fig. 5 is a characteristics diagram that shows operation of the accelerator response torque computing block 131 in the motor torque target data calculator 130 of the vehicle driving system according to the present embodiment.

As shown in Fig. 4, the rear-wheel average velocity VWR and the accelerator opening angle signal APO are input to the accelerator response torque computing block 131. The rear-wheel average velocity VWR is a value calculated as the average value of the rear right-wheel velocity VWR_RH and the rear left-wheel velocity VWR_LH.

As shown in Fig. 5, when the accelerator opening angle signal APO is turned on so that at a rear-wheel average velocity VWR less than 8 km/h, accelerator response torque TQAC becomes 4.5 Nm, and that at a rear-wheel average velocity VWR of 8 km/h or more, accelerator response torque TQAC becomes 0.0 Nm, the accelerator response torque computing block 131 outputs the accelerator response torque TQAC with respect to the rear-wheel average velocity VWR.

If the speed-synchronizing request detector 140 judges that speed synchronizing is necessary, when the accelerator opening angle signal APO is turned on, 4.5 Nm is output, irrespective of values of the rear-wheel average velocity VWR. The output of 4.5 Nm in this case will be described later herein.

Consequently, as illustrated in Fig. 3, the motor torque target data calculator 130 obtains a motor torque target value (MTt) of, for example, 4.5 Nm, as denoted by (D) in Fig. 3. Next, the motor torque target value (MTt) of 4.5 Nm is maintained until the wheel velocity VW shown as (E) in Fig. 3 has become 8 km/h. When the wheel velocity VW reaches 8 km/h, the accelerator response torque computing block 131 linearly reduces the motor torque target value (MTt) so that the target torque will be 0.5 Nm after a required time.

Next, referring back to Fig. 3, a description is given below of driving control under the low-µroad conditions shown as (A) in Fig. 3. Before the time t11 shown in Fig. 3 is reached, the vehicle is in 2WD driving mode 2. At the time t11, when the shift position signal (SFT) indicates range D as denoted by (B) in Fig. 3, the accelerator opening angle signal (APO) is off as denoted by (C), and the wheel velocity (VW) is 0 km/h as denoted by (E) in Fig. 3, the driving mode judging element 110 judges that the vehicle is in 4WD driving standby mode 3. After this, the driving mode judging element 110 outputs a motor torque target value (MTt) of, for example, 0.5 Nm to the driver unit 150 shown in Fig. 2.

At time t12, as denoted by (E) in Fig. 3, when a difference arises between the front wheel velocity VWF and the rear wheel velocity VWR, if the front wheel velocity VWF becomes higher than the rear wheel velocity VWR and the front wheels slip, the driving mode judging element 110 judges that the vehicle needs 4WD driving control mode 5. On the basis of the difference between the front wheel velocity VWF and the rear wheel velocity VWR, the front/rear wheel differential velocity response torque computing block 132 shown in Fig. 4 calculates the DC motor torque target value for controlling the slipping state of the front wheels.

On the basis of a difference between a front-wheel average velocity VWF and a rear-wheel average velocity VWR, the front/rear wheel differential velocity response torque computing block 132 shown in Fig. 4 calculates the DC motor torque target value for controlling the slipping state of the front wheels.

The motor torque target value that the front/rear wheel differential velocity response torque computing block 132 calculates when the driving mode judging element 110 judges that the vehicle is in 4WD driving control mode 5 is described below using Figs. 4 and 6.

Fig. 6 is a characteristics diagram that shows operation of the front/rear wheel differential velocity response torque computing block 132 in the motor torque target data calculator 130 of the vehicle driving system according to the present embodiment.

As shown in Fig. 4, the rear-wheel average velocity VWR and the front-wheel average velocity VWF are input to the front/rear wheel differential velocity response torque computing block 132. The front-wheel average velocity VWF is a value calculated as the average value of the front right-wheel velocity VWF_RH and the front left-wheel velocity VWF_LH.

As shown in Fig. 6, in order that for example, a front/rear wheel differential response torque TQDV will be 0 Nm for a front/rear wheel differential velocity ΔV of 2 km/h and after this, the front/rear wheel differential response torque TQDV will become 10 Nm for a front/rear wheel differential velocity ΔV of 7 km/h, the front/rear wheel differential velocity response torque computing block 132 outputs the front/rear wheel differential response torque TQDV that progressively increases. This output is based on ΔV (= VWF-VWR) that is the differential wheel velocity between the front-wheel average velocity VWF and the rear-wheel average velocity VWR. The torque changer 133 compares an output TQAC of the accelerator response torque computing block 131 and an output TQDV of the front/rear wheel differential velocity response torque computing block 132, and outputs the greater of the two values to the driver unit 150.

Consequently, as illustrated in Fig. 3, the motor torque target data calculator 130 obtains a motor torque target value (MTt) of, for example, 10 Nm, as denoted by (D) in Fig. 3. For example, if the vehicle speed is 8 km/h or less, the output TQAC of the accelerator response torque computing block 131 is 4.5 Nm, as shown in Fig. 6. If the difference ΔV (= VWF-VWR) between the front-wheel average velocity VWF and the rear-wheel average velocity VWR is 3 km/h and the output TQDV of the front/rear wheel differential velocity response torque computing block 132 at this time is 5.5 Nm, the output of the torque changer 133 is 5.5 Nm. After the difference ΔV (= VWF-VWR) between the front-wheel average velocity VWF and the rear-wheel average velocity VWR has decreased below 2 km/h, the motor torque target value (MTt) is linearly reduced so that the target torque will be 0.5 Nm after the required time. At time t13, when the motor torque target value (MTt) of 0.5 Nm is reached, the driving mode changes to stopping sequence mode 7, and at time t14 after a required time, the 4WD CU 100 controls so that the relay (RLY) 7 and the clutch (CL) 4 are turned off

A configuration of the driver unit 150 in the vehicle driving system of the present embodiment is described below using Fig. 7.

Fig. 7 is a block diagram showing the configuration of the driver unit 150 in the vehicle driving system of the present embodiment.

The driver unit 150 includes a motor field current calculator 152, a driving high-power alternator output current calculator 154, feedback controllers 156, 157, 158, and a C1 selector 159. On the basis of the motor speed signal Nm that is input to the 4WD CU 100 shown in Fig. 2, the motor field current calculator 152 calculates a value of the current supplied to the field coil 5a of the motor 5. For example, if the motor speed Nm is N1 or less, the motor field current calculator 152 obtains a motor field current target value Ift of 10 A, as shown in Fig. 7. At a motor speed Nm from N1 to N2, the motor field current target value Ift is progressively reduced from 10 A to 3.6 A. At a motor speed Nm of N2 or more, the motor field current target value Ift is set to be 3.6 A. In this way, when the motor 5 enters a high-speed region, field-weakening control is conducted so that the motor 5 is rotatable at high speed. A difference between the motor field current target value Ift and an actually detected field current If of the motor 5 is detected by the feedback controller 156. After this, the current C2 applied to the field coil of the motor 5 (i.e., in the present example, a duty ratio of a duty signal for switching a power converter) is varied to conduct feedback control so that the above difference is cleared to zero.

On the basis of the motor torque target value MTt output from the motor torque target data calculator 130 and the motor field current target value Ift output from the motor field current calculator 152, the high-power alternator output current calculator 154 uses a map to calculate a value of the current supplied to the motor armature coil 5b. A difference between an alternator output current target value Iat and an actually detected motor armature coil current Ia is detected by the feedback controller 158. After this, the current C1 applied to the field coil of the driving high-power alternator (ALT2) 2 (i.e., in the present example, a duty ratio of a duty signal for switching a power converter) is varied to conduct feedback control so that the above difference is cleared to zero.

If the driving mode judging element 110 judges that the vehicle in synchronous-speed hold driving mode 6, a difference between the rear wheel velocity VWR and the motor speed Nm is detected by the feedback controller 157. After this, the current C1 applied to the field coil of the driving high-power alternator (ALT2) 2 (i.e., in the present example, a duty ratio of a duty signal for switching a power converter) is varied to conduct feedback control so that the above difference is cleared to zero.

The C1 selector 159 selects an output of the feedback controller 158 or an output of the feedback controller 157, depending on the driving mode (MODE) that the driving mode judging element 110 has discriminated. The C1 selector 159 selects the output of the feedback controller 158 if the driving mode (MODE) discriminated by the driving mode judging element 110 is creep-driving mode 4 or 4WD driving control mode 5, or selects the output of the feedback controller 157 if the discriminated driving mode (MODE) is synchronous-speed hold driving mode 6.

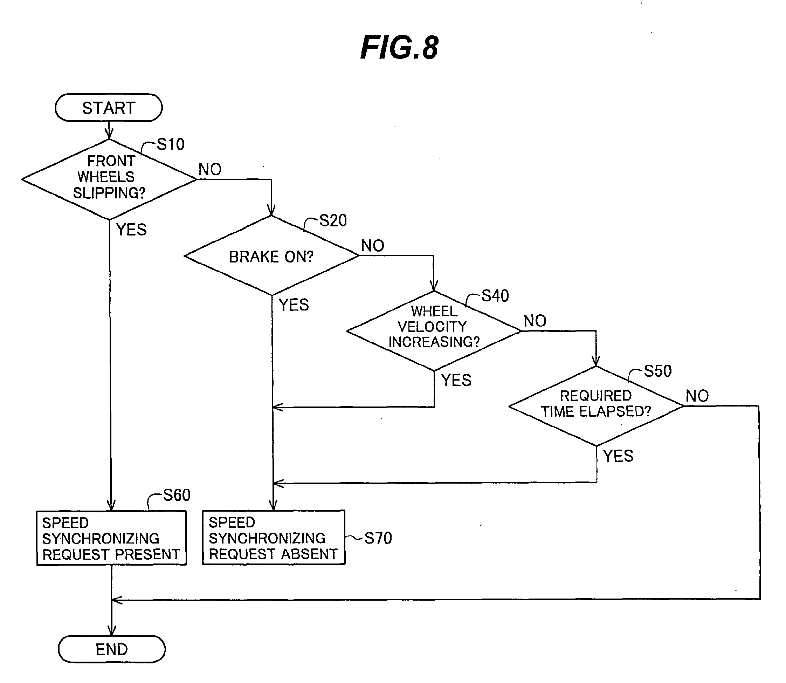

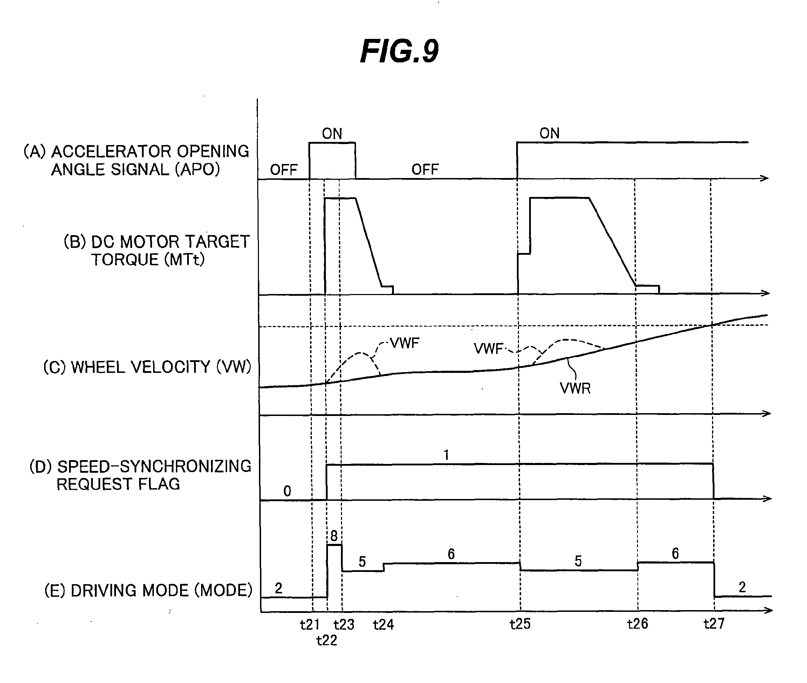

Next, control of the speed-synchronizing request detector 140 in the vehicle driving system of the present embodiment is described below using Figs. 8 and 9.

Fig. 8 is a flowchart that shows operation of the speed-synchronizing request detector in the vehicle driving system of the present embodiment. Fig. 9 is a timing chart showing the operation of the speed-synchronizing request detector in the vehicle driving system of the present embodiment.

In step S10 of Fig. 8, the speed-synchronizing request detector 140 uses a wheel velocity signal VW to discriminate whether front wheel slipping has occurred. If the front-wheel average velocity VWF is higher than the rear-wheel average velocity VWR, the speed-synchronizing request detector 140 discriminates that front wheel slipping has occurred. In this case, in step S50, the speed-synchronizing request detector 140 judges a speed-synchronizing request to be present, and sets up 1 at a speed-synchronizing request detection flag. If front wheel slipping is not occurring, process control proceeds to step S20.

In step S20, the speed-synchronizing request detector 140 uses a brake signal (BRAKE) to discriminate whether the brake pedal has been stepped on. If the brake pedal has been stepped on, the speed-synchronizing request detector 140 will, in step S70, judge a speed-synchronizing request to be absent, and clear the setting of the speed-synchronizing request detection flag to 0. If the brake pedal is not stepped on, process control proceeds to step S40.

Next in step S40, the speed-synchronizing request detector 140 checks the wheel velocity signal VW and discriminates whether the rear-wheel average velocity VWR has exceeded a fixed threshold level. If the rear-wheel average velocity VWR has exceeded the fixed threshold level, the speed-synchronizing request detector 140 will, in step S70, judge a speed-synchronizing request to be absent, and clear the setting of the speed-synchronizing request detection flag to 0. If the rear-wheel average velocity VWR is not in excess of the fixed threshold level, process control proceeds to step S50.

Next in step S50, the speed-synchronizing request detector 140 uses an accelerator opening angle signal (APO) to discriminate whether the accelerator pedal has been stepped on for a fixed time. If the accelerator pedal has not been stepped on for the fixed time, the speed-synchronizing request detector 140 will, in step S70, judge a speed-synchronizing request to be absent, and clear the setting of the speed-synchronizing request detection flag to 0.

In the above sequence, the threshold level of the rear-wheel average velocity that is a basis for setting up 0 at the speed-synchronizing request detection flag, and the time that is another basis for setting up 0 at the speed-synchronizing request detection flag if the accelerator pedal is not stepped on may be made variable according to the vehicle status or driving situation existing at an immediately previous point of time. For example, if frequent slipping occurs, the threshold level of the rear-wheel average velocity that is a basis for setting up 0 at the speed-synchronizing request detection flag may be increased or the time that is another basis for setting up 0 at the speed-synchronizing request detection flag if the accelerator pedal is not stepped on may be extended.

Next, driving mode operation associated with the occurrence of slipping during traveling is described below with reference to Fig. 9.

If the rear-wheel average velocity shown as (C) in Fig. 9 is higher than 8 km/h, even when, at time 21, the accelerator opening angle signal APO shown as (A) in Fig. 9 is on, the accelerator pedal response torque TQAC is 0 Nm and the motor torque target value (MTt) shown as (B) in Fig. 9 is also 0 Nm. The driving mode (MODE) at this time is 2WD driving mode 2, as denoted by (E) in Fig. 9.

After that, if an output of the engine is increased and for example, as denoted by (C) in Fig. 9, the front-wheel average velocity VWF increases above the rear-wheel average velocity VWR to cause the front wheels to slip, the front/rear wheel differential velocity response torque TQDV will be output and as denoted by (B) in Fig. 9, the motor torque target value (MTt) will also be output. The present example assumes that the motor torque target value is 10 Nm, for example.

For example, if the motor torque target value (MTt) becomes 1.0 Nm, the driving mode judging element 110 will, at time t22, judge that the vehicle is in speed-matched driving mode 8.

In speed-matched driving mode, the driver unit 150 increases the motor speed Nm until this speed has matched the rear-wheel average velocity VWR.

After the motor speed has matched the wheel velocity, the 4WD CU 100 controls so that the clutch (CL) 2 is engaged at time t23 and the driving mode judging element 110 changes the driving mode to a 4WD driving control mode.

As described above, since the front wheels are slipping, the speed-synchronizing request detector 140 sets up 1 at the speed-synchronizing request flag on the basis of the discrimination results in step S10 and the process results in step S50 shown in Fig. 8. This state is shown as (D) in Fig. 9.

After that, the front wheels cease to slip, the motor torque target value (MTt) becomes 0.5 Nm, and as denoted by (E) in Fig. 9, the discrimination of synchronous-speed hold driving mode 6 by the driving mode judging element 110 is conducted at time t24. After the driving mode judging element 110 judges that synchronous-speed hold driving mode 6 is necessary, the 4WD CU 100 controls so that the clutch (CL) is disengaged.

When the discrimination of synchronous-speed hold driving mode 6 by the driving mode judging element 110 is completed and the clutch (CL) is in a disengaged state, a section that drives the clutch, and a section that is driven by the clutch are synchronized in speed by the driver unit 150. In other words, the motor speed Nm and the rear-wheel average velocity VWR are matched by feedback control for a difference of 0 between Nm and VWR.

At time t25, when the accelerator opening angle signal APO is turned on with the motor speed Nm and the rear-wheel average velocity VWR matched, the accelerator pedal response torque computing block 131 outputs an accelerator pedal response torque TQAC of 4.5 Nm, regardless of the rear-wheel average velocity VWR. The output is due to the fact that since engine output generally delays with respect to a change in accelerator opening angle, the motor target torque is output when the slipping of the front wheels is preceded by the turn-on of the accelerator opening angle signal APO.

After output of the motor target torque, the 4WD CU 100 controls so that the clutch is engaged and as denoted by (E) in Fig. 9, the driving mode judging element 110 judges that the driving mode is 4WD control.

After that, as set forth above, when the front wheels cease to slip, the driving mode judging element 110 judges that the current driving mode is synchronous-speed hold driving mode 6, as denoted by (E) in Fig. 9. Since the rear-wheel average velocity VWR has increased, however, the speed-synchronizing request detector 140 sets up 0 at the speed-synchronizing request detection flag and the driving mode judging element 110 changes the driving mode to 2WD mode.

For example, if, during the matching of the motor speed Nm to the rear-wheel average velocity VWR, the brake pedal is stepped on and 0 is set up at the speed-synchronizing request detection flag as a result of the discrimination and processing in steps S20 and S60 of Fig. 8, the driving mode judging element 110 stops the motor speed synchronization and the 4WD CU 100 controls so that the relay (RLY) 7 is turned off.

Similarly, for example, if the rear-wheel average velocity VWR exceeds the fixed threshold level thereof during the matching of the motor speed Nm to the rear-wheel average velocity VWR and then 0 is set up at the speed-synchronizing request detection flag as a result of the discrimination and processing in steps S30 and S60 of Fig. 8, the driving mode judging element 110 stops the motor speed synchronization and the 4WD CU 100 controls so that the relay (RLY) 7 is turned off.

For example, if, during the matching of the motor speed Nm to the rear-wheel average velocity VWR, the accelerator pedal is not stepped on for a fixed time and then 0 is set up at the speed-synchronizing request detection flag as a result of the discrimination and processing in steps S40 and S60 of Fig. 8, the driving mode judging element 110 stops the motor speed synchronization and the 4WD CU 100 controls so that the relay (RLY) 7 is turned off.

As in the time t24-t25 of Fig. 9, when the matching of the motor speed Nm to the rear-wheel average velocity VWR is attempted in synchronous-speed hold driving mode 6, even if the output of the engine is not sufficient for matching the motor speed Nm to the rear-wheel average velocity VWR, the driving mode judging element 110 maintains the synchronous-speed hold driving mode and rotates the motor in a permissible output range of the engine. At this time, the driver unit 150 reduces the motor field current target value Ift and conducts field-weakening control so that the motor can be rotated at high speed, even if the engine speed is low and thereby the voltage generated by the high-power alternator is low.

If the driving high-power alternator is too large in load torque and the engine is likely to stall, the speed-synchronizing request detector 140 sets up 0 at the speed-synchronizing request detection flag and the driving mode judging element 110 stops the motor speed synchronization and the 4WD CU 100 controls so that the relay (RLY) 7 is turned off.

Although the above description assumes that the synchronous-speed hold driving mode is established only when the discrimination and processing conditions in steps S10 and S20 of Fig. 8 are satisfied and the clutch is disengaged, the synchronous-speed hold driving mode may always be established when the clutch is disengaged. The establishment of the synchronous-speed hold driving mode in clutch re-engagement makes a speed-matching time unnecessary and immediate clutch engaging possible. That is to say, it becomes possible to engage the clutch immediately upon a clutch-engaging request.

If the synchronous-speed hold driving mode is maintained at all times, however, fuel consumption may be deteriorated, since in that case, a current will be continuously supplied to the motor and hence the engine will need to continuously drive the motor-powering high-power alternator under the power-generating state thereof. For these reasons, as described above, the synchronous-speed hold driving mode is established, only when the conditions in steps S10 and S20 of Fig. 8 are satisfied and the clutch is disengaged. This makes immediate clutch engaging possible and contributes to improving the fuel consumption of the engine.

In addition, although a method of establishing motor speed matching under the disengaged state of the clutch has been described above, motor speed matching may be established with the clutch engaged. That is to say, when the driving mode is a speed matching mode, the motor may output only torque corresponding to friction of the clutch or differential gear and the vehicle may hold a state in which the rear wheels are neither driven nor braked with the motor speed Nm matched to the rear-wheel average velocity VWR.

As set forth above, according to the present embodiment, even after the clutch has been disengaged, the clutch can be early re-engaged by matching the speed of the motor to the rear-wheel average velocity VWR. In addition, since the motor speed is matched only when specific conditions are met, unnecessary motor driving can be omitted to minimize energy loss and to prevent motor and alternator deterioration. This, in turn, makes it possible to early transmit the driving force to the section driven by the clutch, and hence to improve vehicle stability, roadability, and gradient climbing capability.

The above mentioned features and embodiments may be combined in any way, partly or as a whole.

## Claims

1. A vehicle driving system comprising:
an electric motor for generating rotational power transmitted to a wheel via a power transmission mechanism;
wherein, if the transmission of the rotational power to the wheel is interrupted by the power transmission mechanism, the rotational power is transmitted from the motor to the motor connection side of the power transmission mechanism so that the motor connection side of the power transmission mechanism will synchronize with the wheel connection side thereof in rotating speed.

2. A vehicle driving system comprising:
an electric motor mechanically connected to, via a power transmission mechanism, second wheels different from first wheels driven by motive power of an internal combustion engine, wherein the motor is driven by a vehicle-mounted electric power supply to generate rotational power transmitted to the second wheels via the power transmission mechanism; and
control means for controlling the driving of the motor;
wherein, if the transmission of the rotational power to the second wheels is interrupted by the power transmission mechanism, the control means controls the driving of the motor with a rotating speed of the second-wheel side of the power transmission mechanism as a synchronous target speed, the control means controlling the motor side of the power transmission mechanism such that the motor side synchronizes with the second-wheel side at the synchronous target speed.

3. A vehicle driving system mounted in a vehicle which uses an output of motive power from an internal combustion engine to drive either ones of front or rear wheels and uses an output of rotational power from an electric motor to drive the other front or rear wheels, the system comprising:
the motor for generating the rotational power by using an electric power supply mounted as a driving power supply in the vehicle;
a power transmission mechanism disposed between the motor and the other wheels in order to control transmission of the rotational power to the other wheels; and
control means for controlling the driving of the motor and an operation of the power transmission mechanism;
wherein, after interrupting the transmission of the rotational power to the other wheels by controlling the operation of the power transmission mechanism, the control means controls the driving of the motor such that the other wheels side of the power transmission mechanism synchronizes with the motor side thereof in rotating speed.

4. The vehicle driving system according to claim 3, further comprising:
judging means for judging whether speed-synchronizing control is required that synchronizes the other wheels side of the power transmission mechanism and the motor side thereof in rotating speed;
wherein the control means executes the speed-synchronizing control when the judging means judges that the speed-synchronizing control is necessary.

5. The vehicle driving system according to claim 3 or 4, wherein:
if slipping of the front wheels of the front and rear wheels is detected, the judging means judges that the speed-synchronizing control is necessary.

6. The vehicle driving system according to at least one of claims 3 to 5, wherein:
if a forced four-wheel drive mode in which the front or rear wheels are forcibly driven by the internal combustion engine or the motor, respectively, is selected by selection means that selects the forced four-wheel drive mode, the judging means judges that the speed-synchronizing control is necessary.

7. The vehicle driving system according to at least one of claims 3 to 6, wherein:
in case of insufficiency in the rotational power of the motor that is needed to synchronize the motor side of the power transmission mechanism with the wheel side thereof in rotating speed, the control means controls the driving of the motor such that the rotational power of the motor is transmitted therefrom to the motor side of the power transmission mechanism in a range which permits the rotational power of the motor to be output.

8. The vehicle driving system according to at least one of claims 3 to 7, wherein:
in case of insufficiency in the rotational power of the motor that is needed to synchronize the motor side of the power transmission mechanism with the wheel side thereof in rotating speed, the control means reduces a field current to be supplied to the motor.

9. The vehicle driving system according to at least one of claims 3 to 8, wherein:
if a brake pedal is stepped on, if a speed of the rear wheels increases, if a state in which the amount of accelerator pedaling is controlled below a required value continues for at least a required time, or if a mode different from the forced four-wheel drive mode in which the front or rear wheels is forcibly driven by the internal combustion engine or the motor, respectively, is selected by the means that selects the forced four-wheel drive mode, the judging means judges that the speed-synchronizing control is unnecessary; and
when this judgment is conducted, the control means stops the speed-synchronizing control.

10. The vehicle driving system according to at least one of claims 3 to 9, wherein:
the driving power supply is an electric power generator driven by the internal combustion engine.

11. A vehicle driving system comprising:
an electric motor mechanically connected to, via a power transmission mechanism, second wheels different from first wheels driven by motive power of an internal combustion engine, wherein the motor is driven by a vehicle-mounted electric power supply to generate rotational power transmitted to the second wheels via the power transmission mechanism;
control means for controlling the driving of the motor;
wherein the control means has a driving control mode in which to control the driving of the motor, transmit the rotational power from the motor through the power transmission mechanism to the second wheels, and control the second wheels, and a rotational synchronization hold mode in which to transmit the rotational power from the motor to the motor side of the power transmission mechanism such that when the transmission of the rotational power to the second wheels is already interrupted by the power transmission mechanism, the motor side thereof synchronizes with the wheel side thereof in rotating speed; and the control means executes the rotational synchronization hold mode, after execution of the driving control mode, if the transmission of the rotational power to the second wheels is interrupted by the power transmission mechanism.
